# EUROPEAN PATENT SPECIFICATION

(11) **EP 4 401 215 B1**
(45) Date of publication and mention of the grant of the patent: **06.05.2026**
(21) Application number: 23864149.2
(22) Date of filing: 24.04.2023
(51) Int. Cl.: H01M 50/24, H01M 50/231, H01M 50/224, H01M 50/211

(54) **BATTERY MODULE**
BATTERIEMODUL
MODULE DE BATTERIE

(30) Priority: 25.11.2022 KR 20221060259
(43) Date of publication of application: 17.07.2024
(73) Proprietor: LG ENERGY SOLUTION, LTD., Seoul 07335 (KR)
(72) Inventor: CHANG, Wei-Yuan, 11494 Taipei City (TW); LIAO, Yu-Hsiang, 11494 Taipei City (TW)
(74) Representative: Goddar, Heinz J.
(86) International application number: PCT/KR2023/005562
(87) International publication number: WO 2024/111764

(56) References cited:
- CN-U- 214 203 848
- CN-U- 216 436 030
- JP-A- 2007 323 909
- JP-A- 2019 053 947
- KR-A- 20120 047 562
- KR-A- 20220 101 622
- KR-A- 20220 101 991
- KR-A- 20220 101 991
- KR-B1- 101 511 779

## Description

### TECHNICAL FIELD

The present disclosure relates to an electronic component, more particularly, to a battery module.

### BACKGROUND ART

A portable electronic product includes a battery module to supply necessary power. In some electronic products, in order to arrange the structure for antenna signal transmission and ESD (Electro Static Discharge) protection in a limited space, a conductive tape or metal layer is attached to the battery module to be used as an antenna signal transmission path or an ESD grounding path. However, in this case, the thickness of the battery module increases, which violates the trend of thin design of electronic products.

The document KR 2022 0101 991 A discloses a battery module with a conductive protective layer exposed through an insulating layer opening for antenna or ESD grounding.

### DISCLOSURE

### Technical Problem

The present disclosure is designed to solve the problems of the related art, and therefore the present disclosure is directed to providing a battery module having an electrostatic protection function by providing an antenna signal transmission path or an ESD grounding path without increasing the thickness.

### Technical Solution

A battery module according to the present disclosure includes a battery assembly and a protection assembly. The battery assembly has an outer surface. The protection assembly covers the outer surface of the battery assembly, and the protection assembly includes an adhesive layer, a support layer and a metal coating layer. The adhesive layer and the metal coating layer are located at opposite sides of the support layer, respectively, and the adhesive layer is adhered to the outer surface, such that the metal coating layer is positioned at an outermost side of the battery module.

In an embodiment of the present disclosure, the outer surface may include a first surface, a second surface, and a peripheral surface connecting the first surface and the second surface. The protection assembly may include a first protection sheet and a second protection sheet. The first protection sheet may cover the first surface and extend along the peripheral surface to cover the second surface. The first protection sheet may have an opening, the opening may partially expose the second surface. The second protection sheet may cover the first protection sheet located on the second surface and the second surface exposed by the opening.

In an embodiment of the present disclosure, an edge of the first protection sheet located on the peripheral surface may match an edge of the second protection sheet.

In an embodiment of the present disclosure, the metal coating layer may include a tin layer.

In an embodiment of the present disclosure, the material of the support layer may include PET.

In an embodiment of the present disclosure, a first thickness of the support layer may be greater than a second thickness of the adhesive layer, and the second thickness of the adhesive layer may be greater than a third thickness of the metal coating layer.

In an embodiment of the present disclosure, the thickness of the metal coating layer may be greater than 0 and less than or equal to 0.004 mm.

In an embodiment of the present disclosure, the battery assembly may include a support structure and at least one battery unit, the support structure may support the at least one battery unit, and the protection assembly may be at least partially in direct contact with the support structure and at least partially in direct contact with the battery unit.

In an embodiment of the present disclosure, at least one free space may be provided between the support structure and the at least one battery unit.

In an embodiment of the present disclosure, the at least one battery unit may include at least one soft pack battery cell.

### Advantageous Effects

According to the above, in the battery module according to the present disclosure, the protection assembly surrounds the outer surface of the battery assembly, and the protection assembly including an adhesive layer, a support layer and a metal coating layer is adhered to the outer surface of the battery assembly through the adhesive layer so that the metal coating layer is located at the outermost side of the battery module. Through this, the metal coating layer serves as an antenna signal transmission path or an ESD ground path, so it is not necessary to separately attach a conductive tape or metal layer to the battery module to provide an electrical path. Therefore, the battery module according to the present disclosure may have an electrostatic protection function without increasing the thickness.

### DESCRIPTION OF DRAWINGS

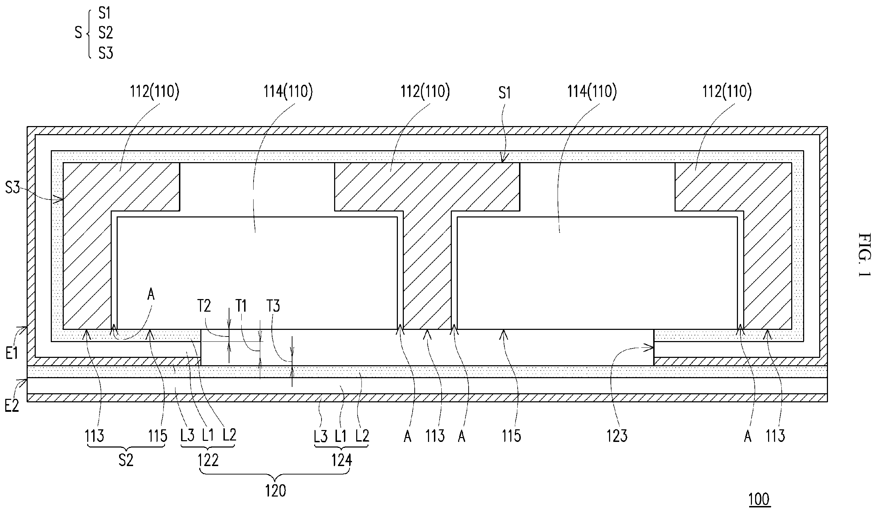

FIG. 1 is a cross-sectional view showing a battery module according to an embodiment of the present disclosure.

### BEST MODE

In order to understand the features and advantages of the present disclosure more clearly and easily, a detailed description is provided in conjunction with the drawings through the following embodiment.

The present disclosure can be understood by referring to the following detailed description and the accompanying drawings, and it should be noted that for easy understanding of the present disclosure and conciseness of the drawings, the structures in the drawings are not drawn to scale. In addition, the quantity and size of each component in the drawing is only an example and does not limit the present disclosure.

FIG. 1 is a cross-sectional view showing a battery module according to an embodiment of the present disclosure. Referring to FIG. 1, a battery module 100 according to this embodiment is a battery module used, for example, in a notebook computer or other electronic products, and includes a battery assembly 110 and a protection assembly 120. The battery assembly 110 has an outer surface S. The protection assembly 120 is installed to cover the outer surface S of the battery assembly 110. The protection assembly 120 includes a support layer L1, an adhesive layer L2, and a metal coating layer L3, among which the adhesive layer L2 and the metal coating layer L3 are located at opposite sides of the support layer L1, respectively, and the adhesive layer L2 is adhered to the outer surface S. In other words, the metal coating layer L3 of the protection assembly 120 is located at the outermost side of the entire battery module 100.

Specifically, the battery assembly 110 includes a support structure 112 and at least one battery unit (two battery units 114 are shown as an example), among which the support structure 112 supports the battery unit 114. In the cross section of FIG. 1, the support structure 112 is shown as three structures separated from each other, but the present application is not limited thereto, and the support structure 112 may actually be an integral structure. In one embodiment, the battery unit 114 may be a soft pack battery cell, but is not limited thereto. In addition, at least one free space A is provided between the support structure 112 and the battery unit 114 so as to leave a margin necessary for thermal expansion and deformation of the battery unit 114. The outer surface S of the battery assembly 110 includes a first surface S1, a second surface S2, and a peripheral surface S3 connecting the first surface S1 and the second surface S2. One end of the support structure 112 may be regarded as the first surface S1 of the battery assembly 110, and the other end 113 of the structure 112 and the surface 115 of the battery unit 114 together constitute the second surface S2 of the battery assembly 110. The side surface of the support structure 112 is the peripheral surface S3 connected between the first surface S1 and the second surface S2 of the battery assembly 110.

Referring to FIG. 1 again, the protection assembly 120 is at least partially in direct contact with the support structure 112 and at least partially in direct contact with the battery unit 114. In this embodiment, the protection assembly 120 includes a first protection sheet 122 and a second protection sheet 124. The first protection sheet 122 covers the first surface S1 and extends along the peripheral surface S3 to cover the second surface S2. The first protection sheet 122 has an opening 123, and the opening 123 exposes a part of the second surface S2. The second protection sheet 124 covers the first protection sheet 122 located on the second surface S2 and the second surface S2 exposed by the opening 123. Here, the first protection sheet 122 and the second protection sheet 124 have a three-layer structure (the support layer L1, the adhesive layer L2, and the metal coating layer L3), respectively, among which the first protection sheet 122 of FIG. 1 is formed to be bent according to the shape and size of the battery assembly 110, and the second protection sheet 124 is directly adhered to the first protection sheet 122 in an unbent form. That is, the metal coating layer L3 of the first protection sheet 122 is connected to the adhesive layer L2 of the second protection sheet 124 on the second surface S2, and the second surface S2 exposed by the opening 123 is surrounded within the second protection sheet 124. In this way, the outermost side of the battery module 100 may serve as an antenna signal transmission path or an ESD ground path within the electronic product using the metal coating layer L3 of the protection assembly 120. Therefore, since there is no need to attach a separate conductive tape or metal layer on the battery module 100 to provide an electrical path, the battery module 100 according to this embodiment may have a static electricity protection function without increasing the thickness.

In one embodiment, the edge E1 of the first protection sheet 122 located on the peripheral surface S3 matches the edge E2 of the second protection sheet 124, but is not limited thereto. Also, as shown in FIG. 1, the first thickness T1 of the support layer L1 is greater than the second thickness T2 of the adhesive layer L2, and the second thickness T2 of the adhesive layer L2 is greater than the third thickness T3 of the metal coating layer L3. In one embodiment, the first thickness T1 may range from 0.031 mm to 0.041 mm, the second thickness T2 may range from 0.019 mm to 0.025 mm, and the thickness of the metal coating layer L3 (third thickness T3) is greater than 0 and less than or equal to 0.004 mm, but is not limited thereto. In more detail, before the protection sheet (the first protection sheet 122 and the second protection sheet 124) is adhered the battery assembly 110, a release film (not shown) is further provided to cover the adhesive layer L2 so as to protect and maintain the bonding property. In one embodiment, the support layer L1 is, for example, Mylar or other type of insulating material. In one embodiment, the support layer L1 is made of black polyethylene terephthalate (black PET), for example embossing glue. In one embodiment, the metal coating layer L3 may be a tin layer, but is not limited thereto.

As described above, in the battery module according to the present disclosure, the protection assembly surrounds the outer surface of the battery assembly, and the protection assembly including an adhesive layer, a support layer and a metal coating layer is adhered to the outer surface of the battery assembly through the adhesive layer so that the metal coating layer is located at the outermost side of the battery module. Therefore, since the metal coating layer may be used as an antenna signal transmission path or an ESD ground path, there is no need to separately attach a conductive tape or metal layer on the battery module to provide an electrical path. Therefore, the battery module according to the present disclosure may have an electrostatic protection function without increasing the thickness.

The present disclosure has been described through the embodiment as described above, but is not limited thereto, and appropriate changes and modifications can be made by those skilled in the art within the range that does not deviate from the purpose of the present disclosure, and the scope of protection of the present disclosure shall be based on the appended claims.

### Reference Signs

100: battery module
110: battery assembly
112: support structure
113: the other end
114: battery unit
115: surface
120: protection assembly
122: first protection sheet
123: opening
124: second protection sheet
A: free space
E1, E2: edge
L1: support layer
L2: adhesive layer
L3: metal coating layer
S: outer surface
S1: first surface
S2: second surface
S3: peripheral surface
T1: first thickness
T2: second thickness
T3: third thickness

## Claims

1. A battery module (100), comprising:
a battery assembly (110) having an outer surface (S), and
a protection assembly (120) configured to cover the outer surface (S) of the battery assembly (110) and including an adhesive layer (L2), a support layer (L1) and a metal coating layer (L3), wherein the adhesive layer (L2) and the metal coating layer (L3) are located at opposite sides of the support layer (L1), respectively, and the adhesive layer (L2) is adhered to the outer surface (S), such that the metal coating layer (L3) is positioned at an outermost side of the battery module (100).

2. The battery module according to claim 1,
wherein the outer surface (S) includes a first surface (S1), a second surface (S2), and a peripheral surface (S3) connecting the first surface (S1) and the second surface (S2), the protection assembly (120) includes a first protection sheet (122) and a second protection sheet (124), the first protection sheet (122) covers the first surface (S1) and extends along the peripheral surface (S3) to cover the second surface (S2), the first protection sheet (122) has an opening (123), the opening (123) partially exposes the second surface (S2), and the second protection sheet (124) covers the first protection sheet (122) located on the second surface (S2) and the second surface (S2) exposed by the opening (123).

3. The battery module according to claim 2
wherein an edge (E1) of the first protection sheet (122) located on the peripheral surface (S3) matches an edge (E2) of the second protection sheet (124).

4. The battery module according to claim 1,
wherein the metal coating layer (L3) includes a tin layer.

5. The battery module according to claim 1,
wherein the material of the support layer (L1) includes PET.

6. The battery module according to claim 1,
wherein a first thickness (T1) of the support layer (L1) is greater than a second thickness (T2) of the adhesive layer (L2), and the second thickness (T2) of the adhesive layer (L2) is greater than a third thickness (T3) of the metal coating layer (L3).

7. The battery module according to claim 1,
wherein the thickness (T3) of the metal coating layer (L3) is greater than o and less than or equal to 0.004 mm.

8. The battery module according to claim 1,
wherein the battery assembly (110) includes a support structure (112) and at least one battery unit (114), the support structure (112) supports the at least one battery unit (114), and the protection assembly (120) is at least partially in direct contact with the support structure (112) and at least partially in direct contact with the battery unit (114).

9. The battery module according to claim 8,
wherein at least one free space (A) is provided between the support structure (112) and the at least one battery unit (114).

10. The battery module according to claim 8,
wherein the at least one battery unit (114) includes at least one soft pack battery cell.

## Patentansprüche

1. Batteriemodul (100) aufweisend:
eine Batterieanordnung (110) aufweisend eine äußere Oberfläche (S), und
eine Schutzanordnung (120), die konfiguriert ist, die äußere Oberfläche (S) der Batterieanordnung (110) zu bedecken und eine Klebeschicht (L2), eine Trägerschicht (L1) und eine Metallbeschichtungsschicht (L3) aufweist, wobei die Klebeschicht (L2) und die Metallbeschichtungsschicht (L3) jeweils an gegenüberliegenden Seiten der Trägerschicht (L1) angeordnet sind, und die Klebeschicht (L2) an der äußeren Oberfläche (S) anhaftet, so dass die Metallbeschichtungsschicht (L3) an einer äußersten Seite des Batteriemoduls (100) positioniert ist.

2. Batteriemodul nach Anspruch 1,
wobei die äußere Oberfläche (S) eine erste Oberfläche (S1), eine zweite Oberfläche (S2) und eine periphere Oberfläche (S3), die die erste Oberfläche (S1) und die zweite Oberfläche (S2) verbindet, aufweist, die Schutzanordnung (120) eine erste Schutzschicht (122) und eine zweite Schutzschicht (124) aufweist, die erste Schutzschicht (122) die erste Oberfläche (S1) bedeckt und sich entlang der peripheren Oberfläche (S3) erstreckt, um die zweite Oberfläche (S2) zu bedecken, die erste Schutzschicht (122) eine Öffnung (123) aufweist, die Öffnung (123) die zweite Oberfläche (S2) teilweise freilegt, und die zweite Schutzschicht (124) die erste Schutzschicht (122), die auf der zweiten Oberfläche (S2) angeordnet ist, und die zweite Oberfläche (S2), die durch die Öffnung (123) freigelegt ist, bedeckt.

3. Batteriemodul nach Anspruch 2,
wobei ein Rand (E1) der ersten Schutzschicht (122), die auf der peripheren Oberfläche (S3) angeordnet ist, mit einem Rand (E2) der zweiten Schutzschicht (124) übereinstimmt.

4. Batteriemodul nach Anspruch 1,
wobei die Metallbeschichtungsschicht (L3) eine Zinnschicht aufweist.

5. Batteriemodul nach Anspruch 1,
wobei das Material der Trägerschicht (L1) PET enthält.

6. Batteriemodul nach Anspruch 1,
wobei eine erste Dicke (T1) der Trägerschicht (L1) größer als eine zweite Dicke (T2) der Klebeschicht (L2) ist, und die zweite Dicke (T2) der Klebeschicht (L2) größer als eine dritte Dicke (T3) der Metallbeschichtungsschicht (L3) ist.

7. Batteriemodul nach Anspruch 1,
wobei die Dicke (T3) der Metallbeschichtungsschicht (L3) größer als 0 und kleiner als oder gleich 0,004 mm ist.

8. Batteriemodul nach Anspruch 1,
wobei die Batterieanordnung (110) eine Trägerstruktur (112) und mindestens eine Batterieeinheit (114) aufweist, die Trägerstruktur (112) die mindestens eine Batterieeinheit (114) trägt, und die Schutzanordnung (120) mindestens teilweise in direktem Kontakt mit der Trägerstruktur (112) und mindestens teilweise in direktem Kontakt mit der Batterieeinheit (114) ist.

9. Batteriemodul nach Anspruch 8,
wobei mindestens ein Freiraum (A) zwischen der Trägerstruktur (112) und der mindestens einen Batterieeinheit (114) vorgesehen ist.

10. Batteriemodul nach Anspruch 8,
wobei die mindestens eine Batterieeinheit (114) mindestens eine Softpack-Batteriezelle aufweist.

## Revendications

1. Module de batterie (100) comprenant :
un ensemble de batterie (110) possédant une surface extérieure (S) ; et
un ensemble de protection (120) configuré pour couvrir la surface extérieure (S) de l'ensemble de batterie (110), et comprenant une couche d'adhésif (L2), une couche de support (L1), et une couche de revêtement métallique (L3), la couche d'adhésif (L2) et la couche de revêtement métallique (L3) étant situées sur des côtés opposés de la couche de support (L1), respectivement, et la couche d'adhésif (L2) adhérant à la surface extérieure (S), de sorte que la couche de revêtement métallique (L3) soit positionnée sur le côté le plus extérieur du module de batterie (100).

2. Module de batterie selon la revendication 1,
la surface extérieure (S) comprenant une première surface (S1), une deuxième surface (S2), et une surface périphérique (S3) raccordant la première surface (S1) à la deuxième surface (S2), l'ensemble de protection (120) comprenant une première feuille de protection (122) et une deuxième feuille de protection (124), la première feuille de protection (122) couvrant la première surface (S1), et s'étendant le long de la surface périphérique (S3) pour couvrir la deuxième surface (S2), la première feuille de protection (122) possédant une ouverture (123), l'ouverture (123) exposant partiellement la deuxième surface (S2), et la deuxième feuille de protection (124) couvrant la première feuille de protection (122) située sur la deuxième surface (S2), la deuxième surface (S2) étant exposée par l'ouverture (123).

3. Module de batterie selon la revendication 2,
un bord (E1) de la première feuille de protection (122) situé sur la surface périphérique (S3) correspondant à un bord (E2) de la deuxième feuille de protection (124).

4. Module de batterie selon la revendication 1,
la couche de revêtement métallique (L3) comprenant une couche d'étain.

5. Module de batterie selon la revendication 1,
le matériau de la couche de support (L1) comprenant du PET.

6. Module de batterie selon la revendication 1,
une première épaisseur (T1) de la couche de support (L1) étant supérieure à une deuxième épaisseur (T2) de la couche d'adhésif (L2), et la deuxième épaisseur (T2) de la couche d'adhésif (L2) étant supérieure à une troisième épaisseur (T3) de la couche de revêtement métallique (L3).

7. Module de batterie selon la revendication 1,
l'épaisseur (T3) de la couche de revêtement métallique (L3) étant supérieure à 0 et inférieure ou égale à 0,004 mm.

8. Module de batterie selon la revendication 1,
l'ensemble de batterie (110) comprenant une structure de support (112) et au moins une unité de batterie (114), la structure de support (112) supportant l'au moins une unité de batterie (114), et l'ensemble de protection (120) étant au moins partiellement en contact direct avec la structure de support (112) et au moins partiellement en contact direct avec l'unité de batterie (114).

9. Module de batterie selon la revendication 8,
au moins un espace libre (A) étant agencé entre la structure de support (112) et l'au moins une unité de batterie (114).

10. Module de batterie selon la revendication 8,
l'au moins une unité de batterie (114) comprenant au moins une cellule de batterie à étui souple.
